# EUROPEAN PATENT APPLICATION

(11) **EP 4 576 391 A1**
(43) Date of publication of application: **25.06.2025**
(21) Application number: 24788982.7
(22) Date of filing: 09.04.2024
(51) Int. Cl.: H01M 50/446, H01M 50/449, H01M 50/431, H01M 50/411, H01M 10/052

(54) **SEPARATOR FOR ELECTROCHEMICAL DEVICE AND ELECTROCHEMICAL DEVICE COMPRISING SAME**

(30) Priority: 13.04.2023 KR 20230048993
(71) Applicant: LG Energy Solution, Ltd., Seoul 07335 (KR); Ewha University-Industry Collaboration Foundation, Seoul 03760 (KR)
(72) Inventor: YOON, Yeo Ju, Daejeon 34122 (KR); NAM, Kwan Woo, Daejeon 34049 (KR); KIM, Eun Ji, Seoul 05070 (KR); CHOI, In Young, Seoul 03938 (KR); SUNG, Dong Wook, Daejeon 34122 (KR); JEONG, So Mi, Daejeon 34122 (KR); KIM, Seong Jun, Daejeon 34122 (KR); KIM, Yeong Ha, Daejeon 34122 (KR)
(74) Representative: Hoffmann Eitle
(86) International application number: PCT/KR2024/004688
(87) International publication number: WO 2024/215040

(57) **Abstract**

The present disclosure provides a separator for an electrochemical device, the separator including: a porous polymer substrate; and a porous coating layer including a first metal-organic framework (MOF) particle modified with polyimide, a second metal-organic framework particle and a polymer binder, and formed on at least one surface of the porous polymer substrate, wherein at least one of the first metal-organic framework particle and the second metal-organic framework particle includes zirconium, and has an amine group introduced thereto.

## Description

### Technical Field

The present application claims priority to and the benefits of Korean Patent Application No. 10-2023-0048993, filed with the Korean Intellectual Property Office on April 13, 2023, the entire contents of which are incorporated herein by reference.

The present disclosure relates to a separator for an electrochemical device and an electrochemical device including the same.

### Background Art

Electrochemical devices convert chemical energy into electrical energy using an electrochemical reaction, and recently, lithium secondary batteries having high energy density and voltage, long cycle life, and applicable in various fields have been widely used. A lithium secondary battery may include an electrode assembly prepared with a positive electrode, a negative electrode, and a separator disposed between the positive electrode and the negative electrode, and may be manufactured by storing the electrode assembly in a case together with an electrolyte liquid.

When an abnormal operation occurs due to internal short circuit, overcharge, exposure to a temperature higher than an operating temperature or the like during a process of storing or operating a lithium secondary battery, a gas may be generated while an electrolyte liquid included in the lithium secondary battery is decomposed. The gas generated in the battery may cause an increase in the internal resistance of the battery, shortening a lifetime of the battery. When the amount of generated gas is large, deformation may be caused in the battery case or internal structure, causing the battery to catch fire or explode. Accordingly, studies on methods for reducing the amount of generated gas or reducing a battery volume expansion caused by a gas have been conducted.

### DISCLOSURE

### Technical Problem

The present disclosure is directed to providing a separator for an electrochemical device capable of adsorbing a gas generated in an electrochemical device, and an electrochemical device including the same.

### Technical Solution

One aspect of the present disclosure provides a separator for an electrochemical device, the separator including: a porous polymer substrate; and a porous coating layer including a first Metal-Organic Framework (MOF) particle modified with polyimide, a second metal-organic framework particle and a polymer binder, and formed on at least one surface of the porous polymer substrate, wherein at least one of the first metal-organic framework particle and the second metal-organic framework particle includes zirconium (Zr), and has an amine group introduced thereto.

The first metal-organic framework particle and the second metal-organic framework particle may each have an average particle size (D₅₀) of 300 nm or greater and 10 µm or less according to a Particle Size Distribution (PSD) analysis.

The first metal-organic framework particle and the second metal-organic framework particle may each have an average pore diameter of greater than 5 nm and less than 200 nm.

The first metal-organic framework particle and the second metal-organic framework particle may each have a pore volume per unit mass of 0.2 cm³/g or greater and 1.0 cm³/g or less.

The first metal-organic framework particle and the second metal-organic framework particle may be each independently selected from the group consisting of UiO-66-NH₂, UiO-67-NH₂, NU-1002-NH₂ and MOF-808-NH₂.

The first metal-organic framework particle and the second metal-organic framework particle may be included in a weight ratio of 35:65 to 45:55.

The metal-organic framework particles and the polymer binder may be included in a weight ratio of 80:20 to 95:5.

Another aspect of the present disclosure provides an electrochemical device including: a positive electrode; a negative electrode; and a separator disposed between the positive electrode and the negative electrode, wherein the separator is the separator according to the one aspect.

The electrochemical device may be a lithium secondary battery.

### Advantageous Effects

A separator for an electrochemical device according to the present disclosure is capable of adsorbing a gas such as carbon dioxide generated by decomposition of an electrolyte liquid in a coating layer, thereby preventing performance degradation of an electrochemical device caused by the gas.

### Best Mode

Hereinafter, each constitution of the present disclosure will be described in more detail so that those skilled in the art may readily implement the present disclosure, however, this is just one example, and the scope of a right of the present disclosure is not limited by the following description.

A term "include" used in the present specification is used to list materials, compositions, devices and methods useful to the present disclosure, and is not limited to the listed examples.

Terms "about" and "substantially" used in the present specification are used to refer to, considering unique manufacturing and material tolerances, a range of the number or degree or as a meaning close thereto, and are used to prevent infringers from unfairly using the disclosure stating precise or absolute numbers provided to help understand the present disclosure.

An "electrochemical device" used in the present specification may mean a primary battery, a secondary battery, a super capacitor or the like.

One embodiment of the present disclosure provides a separator for an electrochemical device, the separator including: a porous polymer substrate; and a porous coating layer including a first Metal-Organic Framework (MOF) particle modified with polyimide, a second metal-organic framework particle and a polymer binder, and formed on at least one surface of the porous polymer substrate, wherein at least one of the first and the second metal-organic framework particles includes zirconium (Zr), and has an amine group introduced thereto.

The porous polymer substrate is a porous membrane formed with a plurality of pores, and may prevent a short circuit by electrically insulating a positive electrode and a negative electrode. For example, when the electrochemical device is a lithium secondary battery, the porous polymer substrate may be an ion conductive barrier allowing lithium ions to pass through while blocking an electrical contact between a positive electrode and a negative electrode. At least some of the pores may form a three-dimensional network connecting a surface and an interior of the porous polymer substrate, and a fluid may pass through the porous polymer substrate through the pores.

As the porous polymer substrate, materials physically and chemically stable for an electrolyte liquid, an organic solvent, may be used. Examples of the porous polymer substrate may include resins such as polyolefins such as polyethylene, polypropylene and polybutylene, polyvinyl chloride, polyethylene terephthalate, polycycloolefin, polyethersulfone, polyamide, polyimide, polyimideamide, nylon, polytetrafluoroethylene, and copolymers or mixtures thereof, but are not limited thereto. Preferably, polyolefin-based resins may be used. Polyolefin-based resins may be processed to be relatively thin and may allow a coating slurry to be readily coated thereon, and therefore, are suitable for manufacturing electrochemical devices having higher energy density.

The porous polymer substrate may have a single layer or multilayer structure. The porous polymer substrate includes two or more polymer resin layers with different melting points (Tm), and may provide a shutdown function during battery runaway at a high temperature. For example, the porous polymer substrate may include a polypropylene layer having a relatively high melting point and a polyethylene layer having a relatively low melting point. Preferably, the porous polymer substrate may have a three-layer structure in which polypropylene, polyethylene and polypropylene are laminated in this order. As the polyethylene layer melts as a battery temperature rises above a predetermined temperature, the pores are shut down, and thermal runaway of the battery may be prevented.

The porous polymer substrate may have a thickness of 1 µm or greater and 100 µm or less. Specifically, the porous polymer substrate may have a thickness of 10 µm or greater and 90 µm or less, 20 µm or greater and 80 µm or less, 30 µm or greater and 70 µm or less or 40 µm or greater and 60 µm or less. Preferably, the polymer substrate may have a thickness of 1 µm or greater and 30 µm or less. More preferably, the polymer substrate may have a thickness of 5 µm or greater and 15 µm or less or 8 µm or greater and 13 µm or less. By adjusting the thickness of the porous polymer substrate in the above-described range, the amounts of active materials included in an electrochemical device may increase by minimizing a volume of the electrochemical device while electrically insulating a positive electrode and a negative electrode.

The porous polymer substrate may include pores having an average diameter of 0.01 µm or greater and 1 µm or less. Specifically, the size of the pores included in the porous polymer substrate may be 0.01 µm or greater and 0.09 µm or less, 0.02 µm or greater and 0.08 µm or less, 0.03 µm or greater and 0.07 µm or less or 0.04 µm or greater and 0.06 µm or less. Preferably, the size of the pores may be 0.02 µm or greater and 0.06 µm or less. By adjusting the size of the pores of the porous polymer substrate in the above-described range, air permeability and ion conductivity of the whole manufactured separator may be controlled.

The porous polymer substrate may have air permeability of 10 s/100 cc or greater and 100 s/100 cc or less. Specifically, the porous polymer substrate may have air permeability of 10 s/100 cc or greater and 90 s/100 cc or less, 20 s/100 cc or greater and 80 s/100 cc or less, 30 s/100 cc or greater and 70 s/100 cc or less or 40 s/100 cc or greater and 60 s/100 cc or less. Preferably, the porous polymer substrate may have air permeability of 50 s/100 cc or greater and 70 s/100 cc or less. When the porous polymer substrate has air permeability in the above-described range, air permeability of the manufactured separator may be provided in a range suitable for securing output and cycle characteristics of an electrochemical device.

The air permeability (s/100 cc) means a time (second) taken for 100 cc of air to pass through a porous polymer substrate or a separator having a predetermined area under a constant pressure. The air permeability may be measured using an air permeability tester (Gurley densometer) in accordance with ASTM D 726-58, ASTM D726-94 or JIS-P8117. For example, a time taken for 100 cc of air to pass through a 1 square inch (or 6.54 cm²) sample under a pressure of 0.304 kPa of air or a pressure of 1.215 kN/m² of water may be measured using a 4110N densometer of Gurley. For example, a time taken for 100 cc of air to pass through a 1 square inch sample under a constant pressure of 4.8 inches of water at room temperature may be measured using an EG01-55-1MR tester of Asahi Seico Co., Ltd.

The porous polymer substrate may have porosity of 10 vol% or greater and 60 vol% or less. Specifically, the porous polymer substrate may have porosity of 15 vol% or greater and 55 vol% or less, 20 vol% or greater and 50 vol% or less, 25 vol% or greater and 45 vol% or less or 30 vol% or greater and 40 vol% or less. Preferably, the porous polymer substrate may have porosity of 30 vol% or greater and 50 vol% or less. When the porous polymer substrate has porosity in the above-described range, ion conductivity of the manufactured separator may be provided in a range suitable for securing output and cycle characteristics of an electrochemical device.

The porosity means a ratio of the volume of pores with respect to the total volume of the porous polymer substrate. The porosity may be measured using methods known in the art. For example, the porosity may be measured using a BET (Brunauer Emmett Teller) measurement method using adsorption of nitrogen gas, a capillary flow porometer, or a water or mercury infiltration method.

The porous coating layer is formed on at least any one surface of the porous polymer substrate, and may include a metal-organic framework particle and a polymer binder. The metal-organic framework particle may mean one metal-organic framework of a single type, or one or more metal-organic frameworks being aggregated to form a regular or irregular particle.

The metal-organic framework particle may include, while being identical to each other, a first metal-organic framework particle having at least a portion of the surface being modified with polyimide and a second metal-organic framework particle of which the surface is not modified. Alternatively, the metal-organic framework particle may include two or more types of metal-organic framework particles different from each other, and a surface of any one of the particles may be modified with polyimide and the particle may be referred to as the first metal-organic framework particle.

The metal-organic framework particle may include one or more metal ions or metals including zirconium, and one or more organic ligands including a ligand having an amine group. At least one of the organic ligands may include one or more amine groups, and may be coordinated to the metal ion or metal to expose the one or more amine groups to the surface of the metal-organic framework particle. For example, at least one of the first metal-organic framework particle and the second metal-organic framework particle includes zirconium, and may have an amine group introduced thereto. Preferably, both the first metal-organic framework particle and the second metal-organic framework particle include zirconium, and have the organic ligand including an amine group coordinated to the zirconium.

Properties of the metal-organic framework may vary depending on the type of functional group introduced, and properties related to gas adsorption may be the most superior in the metal-organic framework having an amine group introduced thereto. For example, the metal-organic framework having an amine group introduced thereto has larger specific surface area and pore diameter compared to a metal-organic framework having a carboxyl group, a sulfonic acid group or a hydroxyl group introduced thereto, thereby having excellent carbon dioxide adsorption capacity. In addition, the metal-organic framework particle having an amine group has excellent adsorption capacity for carbon dioxide compared to a metal-organic framework particle that does not have an amine group since the amine group acts as a Lewis base center. The metal-organic framework having an amine group may provide stable carbon dioxide adsorption capacity both in the presence and absence of water compared to a metal-organic framework having a polar functional group or hydrophobic functional group. For example, the metal-organic framework having an amine group introduced thereto may provide stable adsorption capacity for carbon dioxide compared to a metal-organic framework having a naphthyl group, a nitro group or a methoxy group introduced thereto since it may form a hydrogen bond with water or carbon dioxide through the amine group.

The first metal-organic framework particle has its surface modified with polyimide. The first metal-organic framework particle may be an amine group metal-organic framework particle, and preferably, may have one or more amine groups exposed to the particle surface. The first metal-organic framework particle modified with polyimide may include those in which polyimide is formed by using at least some of the amine group in an imidization reaction, or those in which polyimide is introduced through a portion other than the amine group in the metal-organic framework. The first metal-organic framework modified with polyimide may have one or more amine groups exposed to the surface. The first metal-organic framework particle modified with polyimide has excellent dispersibility and stability in a coating slurry for forming a porous coating layer compared to an unmodified particle. The coating slurry including the first metal-organic framework particle modified with polyimide may have decreased precipitate generation and sedimentation velocities. The porous coating layer prepared with the coating slurry has higher packing density per unit thickness, which may provide improved adsorption capacity for a gas generated in an electrochemical device.

The first metal-organic framework particle and the second metal-organic framework particle may each have an average particle size (D₅₀) of 300 nm or greater and 10 µm or less according to a Particle Size Distribution (PSD) analysis. Specifically, each of the particles may have an average particle size of 300 nm or greater and 5000 nm or less, 400 nm or greater and 2000 nm or less or 500 nm or greater and 1000 nm or less. By adjusting the average particle size of the metal-organic framework particles in the above-described range, a specific surface area of the porous coating layer is maximized, and as a result, a separator having excellent gas adsorption capacity may be manufactured. The first metal-organic framework particle modified with polyimide may have a larger average particle size than the second metal-organic framework particle. Specifically, the second metal-organic framework particle may have an average particle size of 300 nm or greater and 1000 nm or less, and the first metal-organic framework particle may have a larger average particle size larger than the second metal-organic framework particle within a range of 300 nm or greater and 10 µm or less.

As for the particle size distribution analysis, an average particle size of the particle may be obtained from, after dispersing the metal-organic framework particle in a dispersion medium, distribution of the particle sedimentation velocity (separation velocity distribution). For example, after dispersing one or more particles in the dispersion medium, light transmission for the precipitated particles is measured at regular time intervals, and an average particle size of the particle may be obtained using the particle migration velocity obtained from the transmission profile, and absorbance of the corresponding particle for maximum absorbance obtainable by converting the transmission into absorbance.

The first metal-organic framework particle and the second metal-organic framework particle may each have an average pore diameter of greater than 5 nm and less than 200 nm. Specifically, an average diameter of the pores formed in each particle may be greater than 5 nm and less than 190 nm, greater than 30 nm and less than 180 nm, greater than 50 nm and less than 170 nm, greater than 60 nm and less than 160 nm, greater than 70 nm and less than 150 nm, greater than 80 nm and less than 140 nm, greater than 90 nm and less than 130 nm or greater than 100 nm and less than 120 nm. By adjusting the pore diameter of the metal-organic framework particle in the above-described range, the specific surface area of the porous coating layer is maximized, and as a result, a separator having excellent gas adsorption capacity may be manufactured. The first metal-organic framework particle modified with polyimide may have a smaller average pore diameter than the second metal-organic framework. Specifically, the second metal-organic framework particle may have an average pore diameter of 35 nm or greater and less than 200 nm, and the first metal-organic framework particle may have a smaller average pore diameter than the second metal-organic framework particle within a range of 5 nm or greater and less than 200 nm. The first metal-organic framework particle may have an average pore diameter of 5 nm or greater and less than 50 nm, preferably 7 nm or greater and less than 30 nm.

The average pore diameter of the metal-organic framework particle may be a value measured in the process of calculating a BET model using a BET-specific surface area analyzer. The first metal-organic framework particle and the second metal-organic framework particle may each have a pore volume per unit mass of 0.2 cm³/g or greater and 1.0 cm³/g or less. Specifically, each of the particles may include pores of 0.3 cm³/g or greater and 0.9 cm³/g or less or 0.5 cm³/g or greater and 0.8 cm³/g or less. By adjusting the pore volume of the metal-organic framework particle in the above-described range, the specific surface area of the porous coating layer is maximized, and as a result, a separator having excellent gas adsorption capacity may be manufactured. The first metal-organic framework particle modified with polyimide may have a smaller pore volume per unit mass compared to the second metal-organic framework particle. Specifically, the second metal-organic framework particle may have a pore volume of 0.8 cm³/g or greater and 1.0 cm³/g or less, and the first metal-organic framework particle may have a smaller pore volume than the second metal-organic framework particle within a range of 0.2 cm³/g or greater and 1.0 cm³/g or less. The first metal-organic framework particle may have the pore volume of 0.2 cm³/g or greater and 0.5 cm³/g or less.

Like the measurement of the porosity described above, the pore volume per unit mass of the metal-organic framework particle may be measured using methods known in the art.

The first metal-organic framework particle and the second metal-organic framework particle may be each independently selected from the group consisting of UiO-66, UiO-67, NU-1002 and MOF-808. Specifically, the first metal-organic framework particle and the second metal-organic framework particle may be each independently selected from the group consisting of UiO-66-NH₂, UiO-67-NH₂, NU-1002-NH₂ and MOF-808-NH₂. For example, the first metal-organic framework particle may be UiO-66-NH₂ modified with polyimide and may have one or more amine groups exposed to the surface even after the modification, and the second metal-organic framework particle may be UiO-66-NH₂.

The porous coating layer may include the first metal-organic framework particle modified with polyimide and the second metal-organic framework particle not modified with polyimide in a weight ratio of 35:65 to 45:55. Preferably, the porous coating layer may include the first metal-organic framework particle and the second metal-organic framework particle in a weight ratio of 35:65 to 40:60. The first metal-organic framework may improve dispersibility of the coating slurry to improve packing density of the porous coating layer, and the second metal-organic framework may improve a specific surface area of the porous coating layer. When including both the first metal-organic framework particle and the second metal-organic framework particle in the above-described weight ratio, a separator in which a porous coating layer having both high packing density and high specific surface area is formed may be obtained. When the first metal-organic framework particle is included in an amount greater than the ratio described above, the porous coating layer has a decreased specific surface area, which may reduce the amount of gas adsorption of a separator.

The polymer binder may bind the first metal-organic framework particles, the second metal-organic framework particles or the first metal-organic framework particle and the second metal-organic framework particle included in the porous coating layer, and may provide adhesive strength to the porous coating layer.

The polymer binder may include an acryl-based polymer binder, a fluorine-based polymer binder or a combination thereof.

The acryl-based polymer binder may include one or more monomers selected from the group consisting of (meth)acrylic acid, (meth)acrylate, propyl acrylate, isopropyl acrylate, n-butyl acrylate, isobutyl acrylate, n-amyl acrylate, isoamyl acrylate, n-ethylhexyl acrylate, 2-ethylhexyl acrylate, 2-hydroxyethyl acrylate, methyl methacrylate, ethyl methacrylate, propyl methacrylate, isopropyl methacrylate, n-butyl methacrylate, isobutyl methacrylate, n-amyl methacrylate, isoamyl methacrylate, n-hexyl methacrylate, n-ethylhexyl methacrylate, 2-ethylhexyl methacrylate, hydroxyethyl methacrylate, (meth)acrylonitrile butyl (meth)acrylate, 2-ethylhexyl (meth)acrylate, ethyl (meth)acrylate, methyl (meth)acrylate, n-propyl (meth)acrylate, isopropyl (meth)acrylate, t-butyl (meth)acrylate, pentyl (meth)acrylate, n-octyl (meth)acrylate, isooctyl (meth)acrylate, isononyl (meth)acrylate, lauryl (meth)acrylate and tetradecyl (meth)acrylate as a repeating unit.

For example, the acryl-based polymer binder may include one or more selected from the group consisting of polyacrylic acid, methyl acrylate, ethyl acrylate, isopropyl acrylate, n-butyl acrylate, isobutyl acrylate, ethylhexyl acrylate, methyl methacrylate, styrene-butadiene rubber, nitrile-butadiene rubber, acrylonitrile-butadiene rubber and acrylonitrile-butadiene-styrene rubber.

The fluorine-based polymer binder may be a polyvinylidene fluoride-based polymer binder. For example, the fluorine-based polymer binder may be one or more selected from the group consisting of polyvinylidene fluoride, polyhexafluoropropylene, polytetrafluoroethylene, polyvinylidene fluoride-hexafluoropropylene (PVDF-HFP), polyvinylidene fluoride-trichloroethylene (PVDF-TCE) and polyvinylidene fluoride-chlorotrifluoroethylene (PVDF-CTFE), and specifically, may be a copolymer including polyvinylidene fluoride.

The polymer binder may have a particle shape. For example, the polymer binder may have a spherical or elliptical shape, but the shape is not limited thereto. The polymer binder may have an average particle size (D₅₀) of 100 nm or greater and 500 nm or less. Specifically, the polymer binder may have an average particle size (D₅₀) of 150 nm or greater and 450 nm or less, 200 nm or greater and 400 nm or less or 250 nm or greater and 350 nm or less. Preferably, the polymer binder may be a spherical particle having an average particle size (D₅₀) of 200 nm or greater and 400 nm or less. By adjusting the particle size of the polymer binder particle in the above-described range, a migration path of lithium ions and adhesive strength of the porous coating layer for the porous substrate may be secured at the same time.

The metal-organic framework particle and the polymer binder may be included in a weight ratio of 80:20 to 95:5. The metal-organic framework particle include both the first and second metal-organic framework particles, and the metal-organic framework particle and the polymer binder may have a weight ratio of 85:15, 90:10 or 95:5. By adjusting the amounts of the metal-organic framework particle and the polymer binder in the above-described range, adhesion of the porous coating layer to the porous polymer substrate and thermal shrinkage of the porous polymer substrate may be reduced.

The porous coating layer may have packing density of 1 g/cm³ or greater and 1.04 g/cm³ or less. By adjusting the packing density of the porous coating layer in the above-described range, a separator exhibiting stable cycle characteristics in terms of air permeability and resistance may be obtained.

The porous coating layer may be formed by coating one surface of the porous polymer substrate with a coating slurry including the first metal-organic framework particle, the second metal-organic framework particle, a polymer binder and a dispersion medium. For example, the separator may be manufactured by coating the coating slurry on at least any one surface of the porous polymer substrate, and then drying the result to remove the dispersion medium. The porous coating layer may have a porous structure by including an interstitial volume in which the first metal-organic framework particles, the second metal-organic framework particles or the first metal-organic framework particle and the second metal-organic framework particle are connected by the polymer binder. The porous coating layer may adhere to the porous polymer substrate to prevent thermal shrinkage of the porous polymer substrate, while allowing lithium ions to pass through.

The coating slurry includes a dispersion medium, thereby dissolving or dispersing at least a portion of the polymer binder, and dispersing the first metal-organic framework particle and the second metal-organic framework particle. As the coating slurry, those having the metal-organic framework particles uniformly dispersed by controlling the type or content of the dispersion medium may be used. The first metal-organic framework particle may exhibit excellent dispersibility in the coating slurry through polyimide modification. For example, the dispersion medium may be one selected from the group consisting of water, ethanol, acetone, isopropyl alcohol (IPA), dimethylacetamide (DMAc), dimethylformamide (DMF), N-methyl-2-pyrrolidone (NMP), acetonitrile and combinations thereof. By using the above-described type of dispersion medium, a porous coating layer in which the first metal-organic framework particle and the second metal-organic framework particle are uniformly dispersed may be formed.

The coating slurry may have a viscosity of 20 cps or greater and less than 100 cps. Specifically, the coating slurry may have a viscosity of 30 cps or greater and 90 cps or less, or 40 cps or greater and 80 cps or less. Preferably, the coating slurry may have a viscosity of 25 cps or greater and 40 cps or less. When the coating slurry has a viscosity of 100 cps or greater, it becomes difficult to manufacture a separator through continuous coating on the porous polymer substrate, and productivity may not be secured.

By further including additives such as a dispersant, a surfactant, an antifoaming agent, a flame retardant and a wetting agent, the coating slurry may improve dispersibility and flame retardancy, and improve uniformity of the formed porous coating layer. For example, the dispersant may include one or more selected from the group consisting of oil-soluble polyamine, oil-soluble amine compounds, fatty acids, fatty alcohols, sorbitan fatty acid esters, tannic acid and pyrogallic acid. Using the above-described type of dispersant may improve stability of the coating slurry, and may secure uniformity of the porous coating layer formed with the coating slurry.

The additives may be included in an amount of 0% by weight or greater and 5% by weight or less based on the total weight of the coating slurry. Specifically, the additives may be included in an amount of 0.01% by weight or greater and 4% by weight or less, 0.1% by weight or greater and 3% by weight or less or 1% by weight or greater and 2% by weight or less. Preferably, the content of the additives may be 3% by weight or greater and 5% by weight or less. By adjusting the content of the additives in the above-described range, uniform dispersion and stability of the first metal-organic framework particle and the second metal-organic framework particle included in the coating slurry may be accomplished.

The dispersion medium included in the coating slurry may be removed by drying or heating after forming the porous coating layer. For example, the porous coating layer may include the dispersion medium in an amount of 5 ppm or less. Preferably, the porous coating layer may be formed with the first metal-organic framework particle, the second metal-organic framework particle and a polymer binder. During the process of removing the dispersion medium, a plurality of pores may be formed on a surface or an inside of the porous coating layer. The pore may include an interstitial volume formed between the first metal-organic framework particles, the second metal-organic framework particles or the first metal-organic framework particle and the second metal-organic framework particle, and may have a structure that allows a fluid to pass through by forming a three-dimensional network.

The porous coating layer may have a thickness of 1 µm or greater and 15 µm or less. Specifically, the porous coating layer may have a thickness of 2 µm or greater and 14 µm or less, 3 µm or greater and 13 µm or less, 4 µm or greater and 12 µm or less, 5 µm or greater and 11 µm or less, 6 µm or greater and 10 µm or less or 7 µm or greater and 9 µm or less. Preferably, the porous coating layer may have a thickness of 1 µm or greater and 5 µm or less. By adjusting the thickness of the porous coating layer in the above-described range, shrinkage of the porous polymer substrate is minimized, and stable adhesion to the porous polymer substrate may be obtained.

The separator for an electrochemical device may have air permeability of 50 s/100 cc or greater and 150 s/100 cc or less. Specifically, the separator may have air permeability of 60 s/100 cc or greater and 140 s/100 cc or less, 70 s/100 cc or greater and 130 s/100 cc or less, 80 s/100 cc or greater and 120 s/100 cc or less or 90 s/100 cc or greater and 110 s/100 cc or less. Preferably, the separator may have air permeability of 50 s/100 cc or greater and 80 s/100 cc or less. When the separator has air permeability in the above-described range, output, stability and cycle characteristics of an electrochemical device may be secured.

Another embodiment of the present disclosure provides an electrochemical device including: a positive electrode; a negative electrode; and a separator provided between the positive electrode and the negative electrode, wherein the separator is the separator for an electrochemical device of the above-described embodiment. The electrochemical device may be manufactured by inserting an electrode assembly including a positive electrode, a negative electrode and a separator provided between the positive electrode and the negative electrode into a case or pouch and sealing the case or pouch. Before sealing the case or pouch, an electrolyte liquid may be injected to impregnate the electrode assembly with the electrolyte liquid. The shape of the case or pouch is not limited. For example, the electrochemical device may be a cylindrical, prismatic, coin-type or pouch-type lithium secondary battery.

The positive electrode and the negative electrode may be formed by coating an electrode active material on at least one surface of each current collector through coating and drying. As the current collector, materials having conductivity without causing chemical changes to the electrochemical device may be used. For example, the current collector for a positive electrode may include aluminum, nickel, titanium, baked carbon, stainless steel; aluminum or stainless steel of which surface is treated with carbon, nickel, titanium, silver or the like, and the like, but is not limited thereto. For example, the current collector for a negative electrode may include copper, nickel, titanium, baked carbon, stainless steel; copper or stainless steel of which surface is treated with carbon, nickel, titanium, silver or the like, and the like, but is not limited thereto. The current collector may have various forms such as thin metal plate, film, foil, net, porous body and foam.

The positive electrode is provided with a positive electrode current collector, and a positive electrode active material layer including a positive electrode active material, a conductor and a binder resin on at least one surface of the current collector. The positive electrode active material may include one of a layered compound or a compound substituted with one or more transition metals such as lithium manganese composite oxide (LiMn₂O₄, LiMnO₂ and the like), lithium cobalt oxide (LiCoO₂) or lithium nickel oxide (LiNiO₂); lithium manganese oxide such as chemical formula Li₁₊ₓMn₂₋ₓO₄ (herein, x is from 0 to 0.33), LiMnO₃, LiMn₂O₃ or LiMnO₂; lithium copper oxide (Li₂CuO₂); vanadium oxide such as LiV₃O₈, LiV₃O₄, V₂O₅ or Cu₂V₂O₇; Ni-site-type lithium nickel oxide represented by chemical formula LiNi₁₋ₓMₓO₂ (herein, M=Co, Mn, Al, Cu, Fe, Mg, B or Ga, and x=0.01 to 0.3); lithium manganese composite oxide represented by chemical formula LiMn₁₋ₓMₓO₂ (herein, M=Co, Ni, Fe, Cr, Zn or Ta, and x=0.01 to 0.1) or Li₂Mn₃MO₃ (herein, M=Fe, Co, Ni, Cu or Zn); LiMn₂O₄ in which some of Li in the chemical formula are substituted with alkaline earth metal ions; a disulfide compound; and Fe₂(MoO₄)₃, or a mixture of two or more types thereof.

The negative electrode is provided with a negative electrode current collector, and a negative electrode active material layer including a negative electrode active material, a conductor and a binder resin on at least one surface of the current collector. The negative electrode may include, as the negative electrode active material, one type selected from among lithium metal oxide, carbon such as non-graphitizable carbon or graphite-based carbon; LiₓFe₂O₃ (0≤x≤1), LiₓWO₂ (0≤x≤1), silicon-based materials such as Si, SiOₓ (0<x<2), SiC and Si alloy; metal composite oxide such as SnₓMe₁₋ₓMe'_{y}O_{z} (Me: Mn, Fe, Pb, Ge; Me': Al, B, P, Si, elements of groups 1, 2 and 3 of the periodic table, halogen; 0<x≤1; 1≤y≤3; 1≤z≤8); lithium metal; lithium alloy; tin-based alloy; metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅; conductive polymer such as polyacetylene; Li-Co-Ni-based material; and titanium oxide, or a mixture of two or more types thereof.

The conductor may be any one selected from the group consisting of graphite, carbon black, carbon fiber or metal fiber, metal powder, conductive whisker, conductive metal oxide, carbon nanotube, activated carbon and polyphenylene derivative, or a mixture of two or more types of conductive materials among these. The carbon nanotube has a graphite sheet in a cylinder shape with a nano sized diameter and has a sp² bond structure, and exhibits characteristics of conductor or semiconductor depending on the angle and the structure in which the graphite sheet is rolled. The carbon nanotube may be divided into single-walled carbon nanotube (SWCNT), doublewalled carbon nanotube (DWCNT) and multi-walled carbon nanotube (MWCNT) depending on the number of bonds forming the wall, and these carbon nanotubes may be properly selected depending on the application of the dispersion. More specifically, the conductor may be one selected from the group consisting of natural graphite, artificial graphite, super-p, acetylene black, ketjen black, channel black, furnace black, lamp black, thermal black, denka black, aluminum powder, nickel powder, zinc oxide, potassium titanate and titanium oxide, or a mixture of two or more types of conductive materials among these.

As the binder resin, binder resins commonly used in an electrode of an electrochemical device may be used. Nonlimiting examples of such a binder resin may include polyvinylidene fluoride-co-hexafluoropropylene, polyvinylidene fluoride-cotrichloroethylene, polymethyl methacrylate, polyethylhexyl acrylate, polybutyl acrylate, polyacrylonitrile, polyvinyl pyrrolidone, polyvinyl acetate, polyethylene-co-vinyl acetate, polyethylene oxide, polyarylate, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxyl methyl cellulose and the like, but are not limited thereto.

The electrolyte liquid is obtained by dissolving or dissociating a salt, which has a structure such as A⁺B⁻ in which A⁺ includes an ion consisting of an alkali metal cation such as Li⁺, Na⁺ or K⁺ or a combination thereof and B⁻ includes an ion consisting of an anion such as PF₆⁻, BF₄⁻, Cl⁻, Br⁻, I⁻, ClO₄^{~}, AsF₆⁻, CH₃CO₂⁻, CF₃SO₃⁻, N(CF₃SO₂)₂⁻ or C(CF₂SO₂)₃⁻ or a combination thereof, in an organic solvent consisting of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethylmethyl carbonate (EMC), gamma butyrolactone or a mixture thereof.

The electrochemical device including the electrode assembly may be a lithium secondary battery. The battery may be used as a unit cell, and may be used as a battery module including the unit cell, a battery pack including the battery module, and a device including the battery pack as a power source. The device may include small devices such as computers, mobile phones and power tools, and medium-to-large devices such as electric motor vehicles including electric vehicles (EV), hybrid electric vehicles (HEV), plug-in hybrid electric vehicles (PHEV) and the like powered by an electric motor; electric two-wheeled bicycles including electric bicycles (E-bike) and electric scooters (E-scooter); electric golf carts; and systems for power storage, but is not limited thereto.

Another embodiment of the present disclosure provides a method for manufacturing a separator for an electrochemical device, the method including: forming a porous coating layer including a first metal-organic framework particle modified with polyimide, a second metal-organic framework particle and a polymer binder on at least one surface of a porous polymer substrate. Contents overlapping with the contents described in the separator for an electrochemical device are replaced with the description of the embodiment provided above.

The forming of the porous coating layer may include preparing a coating slurry including a first metal-organic framework particle, a second metal-organic framework particle, a polymer binder and a dispersion medium, coating the coating slurry on the porous polymer substrate, and drying the result.

The forming of the porous coating layer may further include corona discharging at least one surface of the porous polymer substrate before coating the coating slurry on the porous polymer substrate. The corona discharging of at least one surface of the porous polymer substrate prevents a decrease in the binding strength between the surface of the porous polymer substrate and the surface of the coating layer at a high temperature, and may prevent a decrease in the binding strength between the surface of the polymer substrate and the surface of the coating layer caused by an electrolyte.

The corona discharge treatment may be treating at least one surface of the porous polymer substrate with a voltage of 0.1 kV or greater and 10 kV or less in air. Specifically, the corona discharge treatment may be treating it with a voltage of 0.2 kV or greater and 9 kV or less, 0.3 kV or greater and 8 kV or less, 0.4 kV or greater and 7 kV or less, 0.5 kV or greater and 6 kV or less, 0.6 kV or greater and 5 kV or less, 0.7 kV or greater and 4 kV or less, 0.8 kV or greater and 3 kV or less, 0.9 kV or greater and 2 kV or less or 1.0 kV or greater and 2 kV or less in air. Preferably, the corona discharge treatment may be treating it with a voltage of 1.8 kV in air. By adjusting the applied voltage of the corona discharge treatment in the above-described range, an appropriate number of functional groups are formed on the surface of the polymer substrate, and damages to the surface of the polymer substrate may be prevented.

The forming of the porous coating layer may include coating the porous polymer substrate by applying the coating slurry thereon. For example, the coating may be formed using methods such as a bar coater, a wire bar coater, a roll coater, a spray coater, a spin coater, an inkjet coater, a screen coater, a reverse coater, a gravure coater, a knife coater, a slot die coater, a hot melt coater, a comma coater and a direct metering coater, however, the method is not limited thereto. Preferably, the forming of the porous coating layer may be simultaneously coating the coating slurry on both surfaces of the porous polymer substrate using a bar coater or a slot die coater.

The forming of the porous coating layer may be evaporating the dispersion medium included in the coating layer by drying or heating the coating layer after applying the coating slurry on the porous polymer substrate. The removing of the dispersion medium may be performed at a temperature that may evaporate only the dispersion medium included in the coating layer without deforming the polymer binder included in the coating layer. For example, the removing of the dispersion medium may be heating the coating layer at a predetermined temperature, but ensuring that the temperature of the coating layer surface does not exceed 60°C. When the coating layer is heated under the above-mentioned condition, thermal energy is used to heat and phase change the dispersion medium first, and may not be used to deform the polymer binder.

Hereinafter, the present disclosure will be described in more detail through specific examples and experimental examples. The following examples and experimental examples are for illustrative purposes only, and the present disclosure is not limited by the following examples and experimental examples.

### Example 1

### Preparation of Coating Slurry

As a metal-organic framework particle, UiO-66-NH₂ (average particle size (D₅₀): 1 µm, average pore diameter: 7 nm, pore volume: 0.8 cm³/g) was used. A first metal-organic framework particle modified with polyimide was prepared by reacting an amine group on the surface of the metal-organic framework with an anhydride of polyimide.

To 100 mL of distilled water, an acryl-based polymer binder (Toyo Ink, Co., Ltd., CSB130, solid content 40%, average particle size (D₅₀) 177 nm), carboxyl methyl cellulose (GL CHEM, SG-L02) and a wetting agent were introduced in a weight ratio of 8:5:1 at room temperature (25°C), and 12 g of the first metal-organic framework particle modified with polyimide, and 18 g of the second metal-organic framework particle not modified with polyimide were introduced thereto (weight ratio between (first metal-organic framework+second metal-organic framework):polymer binder is 95:5). The mixture was stirred for 60 minutes using a shaker to prepare a coating slurry.

### Preparation of Porous Polymer Substrate

As a porous polymer substrate, a polyethylene film (MI: 0.2 g/10 mins, Tₘ: 135°C, porosity: 45%, average pore size: 45 nm) having a size of 20 cm x 30 cm and a thickness of 9 µm was used.

### Manufacture of Separator

The coating slurry was coated on both surfaces of the polyethylene film using a bar coater to form a coating layer having each coating thickness of 3 µm.

A process of removing the dispersion medium was repeated 5 times by applying a low temperature air flow to the coating layer-formed polyethylene film, and as a result, a separator having a total thickness of 15 µm was manufactured.

### Example 2

A separator was manufactured in the same manner as in Example 1, except that, when preparing the coating slurry, 10.5 g of the first metal-organic framework particle and 19.5 g of the second metal-organic framework particle were added.

### Comparative Example 1

A separator was manufactured in the same manner as in Example 1, except that, when preparing the coating slurry, 18 g of the first metal-organic framework particle and 12 g of the second metal-organic framework particle were added.

### Comparative Example 2

A separator was manufactured in the same manner as in Example 1, except that, when preparing the coating slurry, 9 g of the first metal-organic framework particle and 21 g of the second metal-organic framework particle were added.

### Comparative Example 3

A separator was manufactured in the same manner as in Example 1, except that, when preparing the coating slurry, 6 g of the first metal-organic framework particle and 24 g of the second metal-organic framework particle were added.

### Comparative Example 4

A separator was manufactured in the same manner as in Example 1, except that, when preparing the coating slurry, the first metal-organic framework particle was not used, and only 30 g of the second metal-organic framework particle was added.

### Comparative Example 5

A separator was manufactured in the same manner as in Example 1, except that, when preparing the coating slurry, the first metal-organic framework particle and the second metal-organic framework particle were not used, and 30 g of an alumina particle (Sumitomo, AES11, average particle size (D₅₀) 500 nm, density 4 g/cm³) was added.

### Experimental Example. Identification of Separator Properties

Properties of the separators manufactured in Examples and Comparative Examples were identified, and the results are shown in the following Table 1.

### Measurement of Sedimentation Velocity of Precipitate in Coating Slurry

A sedimentation velocity of the precipitate in the coating slurry prepared in the process for manufacturing the separator of each of Examples and Comparative Examples was identified. As the metal-organic framework particle included in the coating slurry has better dispersity, the sedimentation velocity of the precipitate was lower.

The sedimentation velocity of the precipitate in the coating slurry was identified using a LUMiSizer Dispersion & Particle Size Analyzer (LUM GmbH). The coating slurry was dispensed into the tube of the analyzer, and a centrifugal force of up to 2,300 G was applied to accelerate a sedimentation or creaming phenomenon of the material in the tube. A transmission profile was obtained while continuously transmitting near-infrared light through the entire tube, and then the sedimentation velocity of the precipitate was calculated from the profile. The results are shown in the following Table 1.

### Measurement of BET Surface Area

Using a BET-specific surface area analyzer (BEL, Microtrac GmbH) on the coating layer of each of the separators, an adsorption isotherm was measured up to 1 bar under a condition of -196°C, and from the measured N₂ adsorption isotherm curve, a BET surface area was calculated using a Brunauer-Ennett-Teller (BET) model.

### Measurement of CO₂ Adsorption Amount of Inorganic Particles

An adsorption isotherm curve was measured by permeating carbon dioxide with purity of 99.99% through the inorganic particles before preparing the coating slurry of each of the separators using the BET-specific surface area analyzer at 25°C, and the amount of carbon dioxide adsorption with respect to the weight of the inorganic particles was measured.

### Method of Acquiring Data on CO₂ Gas Amount

A positive electrode was prepared by weighing lithium manganese-based composite oxide, conductive agent (Denka black), and binder (PVdF) in a weight ratio of 95:2.5:2.5, mixing them in N-methylpyrrolidone (NMP) to create a positive electrode active material slurry, coating the slurry onto a 20 µm thick aluminum foil at a thickness of 200 µm, followed by rolling and drying.

A Li metal plate having a thickness of 200 µm was used as a negative electrode, and after laminating the positive electrode and the negative electrode with the separator of Example or Comparative Example placed in between, the result was inserted into an aluminum pouch.

To the aluminum pouch, 1 g of an electrolyte liquid including, as additives, 3 mol of vinylene carbonate (VC), 1.5 mol of propane sultone (PS), 1 mol of ethylene sulfate (ESa) and 1 mol of lithium salt LiPF₆ in a solvent in which ethylene carbonate (EC)/ethylmethyl carbonate (EMC) are mixed in a weight ratio of 3/7 was injected, and the pouch was sealed to manufacture a cell.

The manufactured cell was charged and discharged once with 0.1 C in a voltage range of 3.0 V to 4.4 V in a 25°C chamber, and 1.0 C charge and 1.0 C discharge were repeated 300 times.

The cell, which had undergone the cycle repetition of 300 times, was pierced to collect the gas inside the cell, and then the amount of carbon dioxide included in the gas was quantified using a flame ionization detector (FID) and a thermal conductivity detector (TCD).

**[Table 1]**

| Categ ory | Precipi tate Sedimen tation Velocit y in Coating Slurry (µm/s) | Thickn ess of Separa tor (µm) | Weight of Separa tor (g/m²) | Packing Density of Coating Layer (g/cm³) | BET of Separ ator Coati ng Layer (m²/g ) | CO₂ Adsorp tion Amount of Inorga nic Partic les (mmol/ g) | Amoun t of CO₂ Gas in Cell (µl) |
|---|---|---|---|---|---|---|---|
| Compa rativ e Examp le 1 | 1.614 | 14.9 | 6.2 | 1.05 | 182 | 3.9 | 115 |
| Examp le 1 | 2.056 | 14.8 | 5.9 | 1.02 | 335 | 4.6 | 93 |
| Examp le 2 | 4.264 | 14.7 | 5.7 | 1.04 | 382 | 4.3 | 96 |
| Compa rativ e Examp le 2 | 10.35 | 14.7 | 5.5 | 0.96 | 421 | 3.0 | 103 |
| Compa rativ e Examp le 3 | 15.32 | 14.8 | 4.3 | 0.74 | 460 | 3.1 | 118 |
| Compa rativ e Examp le 4 | 23.62 | 14.9 | 4.1 | 0.69 | 1072 | 3.2 | 124 |
| Compa rativ e Examp le 5 | 3.2 | 14.7 | 5.3 | 0.92 | 6.2 | 0.2 | 239 |

## Claims

1. A separator for an electrochemical device, the separator comprising:
a porous polymer substrate; and
a porous coating layer including a first metal-organic framework particle modified with polyimide, a second metal-organic framework particle and a polymer binder, and formed on at least one surface of the porous polymer substrate,
wherein at least one of the first metal-organic framework particle and the second metal-organic framework particle includes zirconium, and has an amine group introduced thereto.

2. The separator of claim 1, wherein the first metal-organic framework particle and the second metal-organic framework particle each have an average particle size D₅₀ of 300 nm or greater and 10 µm or less according to a particle size distribution analysis.

3. The separator of claim 1, wherein the first metal-organic framework particle and the second metal-organic framework particle each have an average pore diameter of greater than 5 nm and less than 200 nm.

4. The separator of claim 1, wherein the first metal-organic framework particle and the second metal-organic framework particle each have a pore volume per unit mass of 0.2 cm³/g or greater and 1.0 cm³/g or less.

5. The separator of claim 1, wherein the first metal-organic framework particle and the second metal-organic framework particle are each independently selected from the group consisting of UiO-66-NH₂, UiO-67-NH₂, NU-1002-NH₂ and MOF-808-NH₂.

6. The separator of claim 1, wherein the first metal-organic framework particle and the second metal-organic framework particle are included in a weight ratio of 35:65 to 45:55.

7. The separator of claim 1, wherein the metal-organic framework particles including the first metal-organic framework particle and the second metal-organic framework particle and the polymer binder are included in a weight ratio of 80:20 to 95:5.

8. An electrochemical device comprising:
a positive electrode;
a negative electrode; and
a separator disposed between the positive electrode and the negative electrode,
wherein the separator is the separator of any one of claims 1 to 7.
